# EUROPÄISCHE PATENTSCHRIFT

(11) **EP 2 012 251 B1**
(45) Veröffentlichungstag und Bekanntmachung des Hinweises auf die Patenterteilung: **05.01.2011**
(21) Anmeldenummer: 07111868.1
(22) Anmeldetag: 05.07.2007
(51) Int. Cl.: G06K 7/00, H03C 1/06

(54) **Verfahren zur Optimierung des Sendefrequenzspektrums einer RFID-Schreib-/Lesestation**
Method for optimising the transmitting frequency spectrum of an RFID read-write station
Procédé destiné à l'optimisation du spectre de la fréquence d'émission d'une station d'écriture/lecture RFID

(43) Veröffentlichungstag der Anmeldung: 07.01.2009
(73) Patentinhaber: Feig Electronic GmbH, 35781 Weilburg-Waldhausen (DE)
(72) Erfinder: Desch, Markus, 65527 Niedernhausen (DE)
(74) Vertreter: Knefel, Cordula

(56) Entgegenhaltungen:
- EP-A- 1 638 036
- WO-A-01/35318
- US-A1- 2006 261 953
- "Electromagnetic compatibility and Radio spectrum Matters (ERM); Short Range Devices (SRD); Radio equipment in the frequency range 9 kHz to 25 MHz and inductive loop systems in the frequency range 9 kHz to 30 MHz; Part 1: Technical characteristics and test methods; ETSI EN 300 330-1" ETSI STANDARDS, EUROPEAN TELECOMMUNICATIONS STANDARDS INSTITUTE, SOPHIA-ANTIPO, FR, Bd. ERM-RP08;ERM-TG28, Nr. V151, April 2006 (2006-04), XP014033795 ISSN: 0000-0001

## Beschreibung

Die Erfindung beschreibt ein Verfahren zur Optimierung des Sendefrequenzspektrums einer RFID-Schreib-/Lesestation.

Ein RFID-System für passive Transponder besteht gemäß dem Stand der Technik aus einer Schreib-/Lesestation und mindestens einer daran angeschlossenen oder in die Schreib-/Lesestation integrierten Antenne. Der Antenne eines RFID-Systems kommt dabei die Aufgabe zu, die von der Schreib-/Lesestation erzeugte Energie zu dem oder den Transpondern zu übertragen und Datensignale an den oder die Transponder auszusenden und Antwortsignale von Transpondern zu empfangen.

Die Art der Energie und Datenübertragung hängt dabei wesentlich von der verwendeten Betriebsfrequenz des jeweiligen RFID-Systems ab. So wird im Stand der Technik beispielsweise zwischen Systemen unterschieden, die mit induktiver Kopplung arbeiten und solchen, die nach dem Prinzip einer Funkübertragung arbeiten. Unabhängig von der Frequenz und Wirkungsweise des RFID-Systems nutzen diese eine Betriebsfrequenz, die sie als Trägerfrequenz aussenden. Durch Modulieren dieser Trägerfrequenz können Daten von der Schreib-/Lesestation zu Transpondern übertragen werden. Für die Modulation von Daten sind aus dem Stand der Technik wiederum unterschiedliche Verfahren bekannt. Häufig verwenden RFID-Systeme zum Senden von Daten an einen Transponder eine so genannte Amplitudenmodulation, auch bekannt unter dem Begriff "Amplitude Shift Keying" (ASK). Aber auch phasenmodulierte und frequenzmodulierte Systeme gehören zum Stand der Technik.

Aus dem Stand der Technik sind RFID-Systeme bekannt, die eine ASK-Modulation verwenden. Diese sind beispielsweise in den internationalen Standards ISO/IEC 14443, ISO/IEC 15693 und ISO/IEC 18000-3 spezifiziert, wobei sich diese Systeme trotz prinzipiell gleicher Modulationsart in der Art, wie die Sendedaten codiert werden und im verwendeten Modulationsgrad, also dem Verhältnis des modulierten zum unmodulierten Trägersignal unterscheiden.

Als Art der Codierung beschreibt ISO/IEC 14443 beispielsweise einen modified Miller Code und eine NRZ Codierung, während ISO/IEC 15693 und ISO/IEC 18000-3 Mode 1 eine 1 aus 256 oder eine 1 aus 4 Codierung beschreiben. Hierbei ist jeweils die zeitliche Position, wann das Trägersignal moduliert wird und die Dauer, für die das Trägersignal moduliert wird, spezifiziert, woraus sich eine systemtypische Datenrate ergibt. Nahezu jeder im Standard definierte Parameter ist dabei mit Toleranzen versehen.

Vereinfacht ausgedrückt beschreiben die Standards eine Codierung der Signale, bei der spezifiziert wird, in welchem zeitlichen Abstand (Modulationsrate) und an welcher zeitlichen Position (Modulationsposition) und für welche Dauer (Modulationsdauer) das Trägersignal um einen bestimmten Betrag (Modulationsgrad) in seiner Amplitude reduziert wird, um auf diesem Weg Daten an einen Transponder zu senden. Dieser Vorgang wird als Modulation bezeichnet.

Durch die Modulation der Trägerfrequenz entsteht ein Sendefrequenzspektrum mit einer Mehrzahl unterschiedlicher Frequenzen, bei dem die im Spektrum enthaltenen Frequenzen und der Betrag, mit dem diese Frequenzen im Spektrum vorhanden sind, von der Art der Signalcodierung abhängen. Ursache für das Sendefrequenzspektrum sind harmonische Schwingungen, die durch das Modulieren entstehen. Durch eine Fourier-Transformation können die im Frequenzspektrum enthaltenen harmonischen Frequenzen im Frequenzbereich bestimmt und dargestellt werden.

Neben den bereits genannten Standards sind auch so genannte phasenmodulierte Systeme bekannt, bei denen anstelle der Amplitude die Phasenlage des Sendesignals codiert wird, um Daten von der Schreib-/Lesestation zum Transponder zu übertragen. Ein solches System wird beispielsweise in ISO/IEC 18000-3 Mode 2 beschrieben. Auch bei phasenmodulierten Systemen entsteht durch die Modulation des Signals ein Sendefrequenzspektrum mit einer Mehrzahl unterschiedlicher Frequenzen, wobei für weitere Betrachtungen der Betrag der Phasenverschiebung dem Modulationsgrad eines ASKmodulierten Systems gleichgesetzt werden kann.

Um die Beeinflussung anderer Funksysteme auf benachbarten Frequenzbändern zu verhindern, müssen alle Funksysteme, zu denen auch RFID-Systeme zählen, vorgeschriebene Grenzwerte innerhalb eines definierten Frequenzbandes einhalten. Die einzuhaltenden Grenzwerte sind territorial unterschiedlich und zum Beispiel in den Vorschriften ETSI EN 300200, ETSI EN 300 330 oder FCC 47 CFR Part 15 festgelegt. In diesen Zulassungsvorschriften ist eine so genannte Spektrum-Maske festgelegt, die die maximal zulässige ausgesendete Leistung in einzelnen Frequenzbereichen und die Messbedingungen zur Messung des Frequenzspektrums definiert, welches von einem Funksystem abgestrahlt wird.

Die Spektrum-Maske ist dabei jeweils so ausgelegt, dass das RFID-System in einem schmalen Frequenzbereich im Bereich seiner Trägerfrequenz von beispielsweise 125 kHz, 13,56 MHz oder 868 MHz, eine hohe Sendeleistung zulässt. Außerhalb dieses Bereichs, also für Frequenzen, die oberhalb und unterhalb der Trägerfrequenz liegen, nimmt die zulässige Sendeleistung dann stufenweise ab. Die Spektrum-Maske berücksichtigt damit, dass durch ein Modulationsverfahren zur Datenübertragung jeweils harmonische Frequenzen entstehen, reglementiert aber gleichzeitig die Sendeleistung, die durch diese harmonischen Frequenzen abgestrahlt werden dürfen.

Für die Funkzulassung eines RFID-Systems wird der Betrag der Sendeleistung über das definierte Frequenzspektrum messtechnisch ermittelt und mit der Spektrum-Maske verglichen. Dabei darf das vom RFID-System gesendete Signal in keinem Frequenzbereich den Betrag, der durch die Spektrum-Maske vorgegeben ist, übersteigen, wobei die Zulassungsvorschriften neben der Spektrum-Maske in der Regel auch das anzuwendende Messverfahren vorschreiben. Als Messverfahren wird dabei häufig eine Mittelwertbildung über die in einem bestimmten Frequenzbereich (Filterbandbreite) erfassten Frequenzen über eine definierte Zeitdauer (Zeitkonstante) vorgeschrieben.

Ein bekanntes Messverfahren ist dabei als Quasispitzenwert-Messung bekannt und in der DIN VDE 0876 Teil 16 beschrieben, die ihrerseits auf dem Standard CISPR 16, mit dem Titel "Specification for radio disturbance and immunity measuring apparatus and methods" beruht. Die dort beschriebene Quasispitzenwert-Messung ist eine spezielle Art der Mittelwertbildung für die Messung von Impulsen. In das Ergebnis dieser Quasispitzenwert-Messung gehen unter anderem die Einflussgrößen einer 6-dB-Filterbandbreite von beispielsweise von 9 kHz, eine elektrische Ladezeitkonstante, eine elektrische Entladezeitkonstante und eine mechanische Zeitkonstante des kritisch gedämpften Anzeigeinstruments als maßgebliche Faktoren ein. Das Ergebnis einer Quasispitzenwert-Messung liefert also einen zeitlich gemittelten Wert eines definierten Frequenzbandes, welches durch die Filterbandbreite bestimmt wird.

Durch die Quasispitzenwert-Messung oder andere Verfahren zur Mittelwertbildung wird erreicht, dass eine Frequenz, die zwar mit hoher Amplitude aber dafür nur selten auftritt, weniger stark in das Ergebnis eingeht, als eine Frequenz, die häufiger auftritt.

Die Quasispitzenwert-Messung oder ein anderes Verfahrens zur Mittelwertbildung haben zur Folge, dass nicht das einmalige Überschreiten der Spektrum-Maske durch eine diskrete Frequenz als Kriterium für die Nicht-Zulassungsfähigkeit des Funksystems entscheidet, sondern ein Funksystem erst dann nicht zulassungsfähig ist, wenn der ermittelte Mittelwert in einem Frequenzbereich die Spektrum-Maske überschreitet. Bei den bekannten Messverfahren erfolgt jeweils eine zeitliche Mittelwertbildung der innerhalb einer definierten Zeitspanne (Zeitkonstante) auftretenden Frequenzen innerhalb eines definierten Frequenzbereichs, der durch eine Filterbandbreite definiert ist.

Da nicht nur solche elektronischen Geräte, die explizit als Funksysteme vorgesehen sind, ein mehr oder weniger großes Frequenzspektrum abstrahlen, schreiben die meisten nationalen Behörden für sämtliche elektronischen Geräte Grenzwerte für das zulässige abgestrahlte Frequenzspektrum vor. Insbesondere solche Geräte, in denen digitale Signale mit hoher Frequenz verarbeitet werden, neigen dazu, ein breites Frequenzspektrum mit einer Vielzahl harmonischer Frequenzen abzustrahlen. Damit der Mittelwert dieser harmonischen Frequenzen die vorgeschriebene Spektrum-Maske nicht überschreitet, gehört es zum Stand der Technik, die Taktfrequenzen, mit denen die digitalen Signale verarbeitet werden, in einem bestimmten Frequenzbereich zu variieren. Dieses zum Stand der Technik zählende Verfahren kann auf ein RFID-System nicht angewendet werden, weil das Variieren der Taktfrequenz einem Variieren der Trägerfrequenz gleichkäme, was technisch wenig sinnvoll ist, weil die auf der Trägerfrequenz abgestrahlte Leistung in der Regel bereits optimal an die zulässige Spektrum-Maske angepasst ist und Antennen von RFID-Systemen sowie die Antennen der Transponder in Resonanz arbeiten, um eine möglichst gute Energieübertragung zu gewährleisten, und weil die durch die Modulation hervorgerufen harmonischen Frequenzen nicht zwangsläufig und im gewünschten Maße minimiert würden. Ferner wird die Trägerfrequenz eines RFID-Systems nach dem Stand der Technik in der Regel durch einen Oszillator mit fest eingestellter Frequenz vorgegeben, und kann nicht ständig variiert werden.

Zum Stand der Technik (WO 01/35318 A2) gehört ein Verfahren, mit dem das von einem RFID-Reader abgestrahlte Frequenzspektrum minimiert werden kann. Dazu wird gemäß diesem Stand der Technik vorgeschlagen, die Flanken der Modulationssignale einem sinusförmigen oder cosinusförmigen Verlauf anzunähern. Hierzu wird eine Hardware beschrieben, die die entsprechenden Pulse formt ("pulse shaper circuit").

Das zu diesem Stand der Technik gehörende Verfahren weist den Nachteil auf, dass ein hoher Aufwand an Hardware notwendig ist, um den gewünschten Signalverlauf und damit eine Reduzierung des abgestrahlten Frequenzspektrums zu erzielen.

Weiterhin gehört zum Stand der Technik (US 2006/0261953 A1) ein Verfahren, bei dem "waveform shaping parameter" eingesetzt werden, mit denen der Datenfluss, Impulsanstiegszeit, Impulsabfallzeit, Pulsweite und dergleichen eingestellt werden können.

Diese Einstellung erfolgt, damit unterschiedliche Übertragungstechniken/Übertragungsstandards mit dem Reader ausgeführt werden können. Der Reader nutzt gemäß diesem Stand der Technik die beschriebenen Parameter statisch, damit er an unterschiedliche Übertragungstechniken/Übertragungsstandards oder regional unterschiedliche Funkgrenzwerte angepasst werden kann.

Das der Erfindung zugrunde liegende technische Problem besteht darin, ein Verfahren anzugeben, mit dem es möglich ist, eine Schreib-/Lesestation eines RFID-Systems mit einer möglichst hohen Sendeleistung zu betreiben und gleichzeitig die jeweils zulässige Spektrum-Maske zu unterschreiten, und welches sich durch Änderung der Software der Schreib-/Lesestationen eines RFID-Systems einfach und preiswert realisieren lässt und im Toleranzbereich der jeweiligen technischen Standards ausführbar ist.

Gelöst wird dieses technische Problem durch ein Verfahren mit den Merkmalen gemäß Anspruch 1.

Das erfindungsgemäße Verfahren zur Optimierung eines Sendefrequenzspektrums einer RFID-Schreib-/Lesestation zur optimalen Ausnutzung des Sendefrequenaspektrums innerhalb einer vorgegebenen Spektrum-Maske, bei dem zur Ermittlung des Sendefrequenzspektrums eine Mittelwertbildung durchgeführt wird, zeichnet sich dadurch aus, dass mindestens ein das Sendefrequenzspektrum beeinflussender Modulationsparameter in zeitlichen Abständen variiert wird, und zwar in einem Maße, dass der wenigstens eine Modulationsparameter innerhalb der Toleranzgrenzen des jeweiligen technischen Standards variiert wird und ein Modulationsparameter oder eine Kombination aus Modulationsparametern, bei denen die Spektrum-Maske überschritten wird, erst nach einer Zeit, die größer als die Zeitkonstante der Mittelwertbildung ist, wieder eingestellt wird.

Gemäß dem erfindungsgemäßen Verfahren wird gleichzeitig oder unabhängig voneinander mindestens ein Modulationsparameter variiert, der das Sendefrequenzspektrum der Schreib-/Lesestation als Folge der Modulation der Trägerfrequenz bestimmt. Dazu ist vorteilhaft vorgesehen, die Modulationsrate (Datenrate) und/oder die modulationsdauer und/oder den Modulationsgrad und/oder die Modulationsposition in definierten oder zufälligen zeitlichen Abständen und in einem Maße, welches durch die Toleranzbereiche der jeweiligen technischen Standards zulässig ist, zu variieren. Hierdurch erfolgt eine Verteilung der im Sendefrequenzspektrum enthaltenden Spitzwerte auf eine Mehrzahl unterschiedlicher Frequenzen, was eine Absenkung der innerhalb einer Filterbandbreite gemittelten Spitzenwerte der Frequenzen zur Folge hat und damit ein Einhalten der zulässigen Spektrum-Maske ermöglicht.

Gemäß der Erfindung erfolgt die zeitliche Variation eines oder mehrerer Modulationsparameter nach einer definierten Zeitkonstante in solchen zeitlichen Abständen, dass der Spitzenwert einer harmonischen Frequenz für eine Zeitdauer, die größer ist als die Zeitkonstante der Mittelwertbildung, die Spektrum-Maske nicht mehr übersteigt. Durch die zeitliche Variation der Modulationsparameter wird also sichergestellt, dass der Mittelwert, der sich durch zeitliche Mittelung aus den in der Filterbandbreite gemittelten Frequenzen ergibt, die Spektrum-Maske nicht überschreitet, wodurch erreicht wird, dass ein Spitzenwert nur einen geringen Einfluss auf die Mittelwertbildung hat. Dies hat den Vorteil, dass die Variation der Modulationsparameter von anderen Einflussgrößen unabhängig erfolgt und optimal an das jeweilige Messverfahren anpassbar ist.

Das erfindungsgemäße Verfahren weist den Vorteil auf, dass mit diesem Verfahren eine Schreib-/Lesestation eines RFID-Systems ihre Sendesignale unter Einhaltung territorial unterschiedlicher Funkvorschriften mit jeweils maximaler Sendeleistung senden kann.

In einer weiteren vorteilhaften Ausführungsform erfolgt die Variation eines oder mehrerer Modulationsparameter mit jedem gesendeten Modulationssignal. Hierdurch wird eine gute statistische Verteilung des Sendefrequenzspektrums erreicht.

In einer weiteren vorteilhaften Ausführurigsform erfolgt die Variation eines oder mehrerer Modulationsparameter nach jedem gesendeten Datenwort, beispielsweise Byte. Dies hat den Vorteil, dass bei geringem Softwareaufwand eine gute statistische Verteilung des Sendefrequenzspektrums erzielt wird.

In einer weiteren vorteilhaften Ausführungsform erfolgt die variation, eines oder mehrerer Modulationsparameter nach dem Senden eines vollständigen Befehls. Dies hat den Vorteil, dass während eines Sendevorgangs keine Variationen erfolgen, so dass sich ein Transponder während des Empfangs eines Befehls nicht auf unterschiedliche Modulationsparameter einstellen muss. Ferner hat dies den Vorteil, dass bei typischen Befehlslängen von einigen Millisekunden die Variation der Modulationsparameter in einem Zeitraster erfolgt, welches in etwa der Größenordnung der Zeitkonstante der Mittelwertbildung der typischen Messverfahren erfolgt, so dass beim Senden eines nächsten Befehls gewährleistet ist, dass die Spitzenwerte des Sendespektrums nicht mehr in die Mittelwertbildung eingehen, die den Mittelwert beim Senden eines vorhergehenden Befehls maßgeblich beeinflusst haben.

In einer weiteren vorteilhaften Ausführungsform erfolgt die Variation eines oder mehrerer Modulationsparameter nach dem Senden eines vollständigen Kommunikationszyklus. Dies hat den Vorteil, dass während eines Kommunikationszyklus, beispielsweise einer Schreiboperation auf mehrere aufeinander folgende Datenblöcke oder während des Kommunikationsaufbaus zu einem Transponder aus einer Gruppe von Transpondern, keine Variationen erfolgen, so dass sich ein Transponder während des Kommunikationszyklus nicht auf unterschiedliche Modulationsparameter einstellen muss.

In einer weiteren vorteilhaften Ausführungsform werden für die Variation der Modulationsparameter unterschiedliche Algorithmen, dass heißt unterschiedliche zeitliche Bedingungen und unterschiedliche Kombinationen von variierenden Modulationsparametern verwendet, je nachdem, welche territorial unterschiedliche Spektrum-Maske für den Betrieb von RFID-Schreib-/Lesestationen gelten.

In einer weiteren vorteilhaften Ausführungsform erfolgt die Variation des oder der Modulationsparameter in der Art, dass mindestens ein Minimum der Einhüllenden eines zweiten Frequenzspektrums nach der Variation bei einer Frequenz liegt, an der die Einhüllende eines ersten Frequenzspektrums die Spektrum-Maske überschritten hat. Dies hat den Vorteil, dass einer Überschreitung der Spektrum-Maske aufgrund der Mittelwertbildung gezielt entgegengewirkt werden kann.

Weitere Merkmale und Vorteile der Erfindung ergeben sich anhand der zugehörigen Zeichnung, in der mehrere Ausführungsbeispiele von Signalen nur beispielhaft dargestellt sind. In der Zeichnung zeigen:
- Fig. 1: ein amplitudenmoduliertes Signal im Zeitbereich;
- Fig. 2: ein weiteres amplitudenmoduliertes Signal im Zeitbereich ohne Trägerfrequenz;
- Fig. 3: eine Prinzipdarstellung des Signals aus Fig. 1 im Frequenzbereich;
- Fig. 4: ein weiteres amplitudenmoduliertes Signal im Zeitbereich ohne Trägerfrequenz;
- Fig. 5: eine Prinzipdarstellung des Signals aus Fig. 4 im Frequenzbereich;
- Fig. 6: das Ergebnis einer Mittelwertbildung der Signale aus Fig. 3 und Fig. 5 im Frequenzbereich.

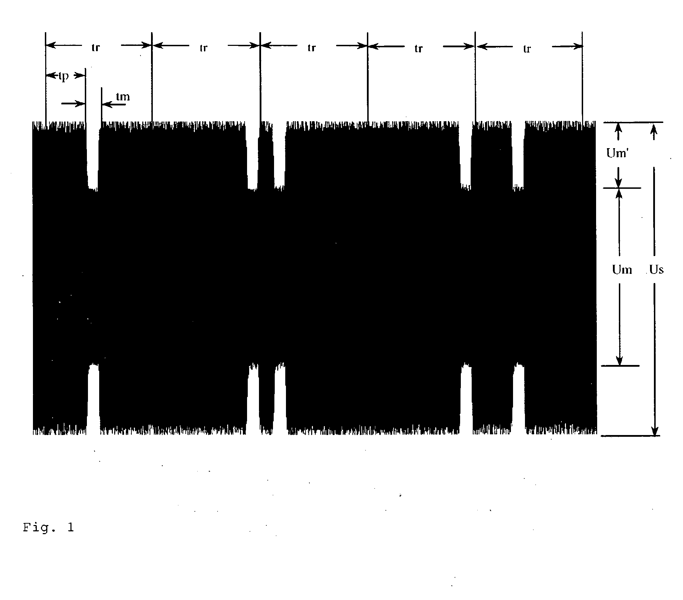

Fig. 1 zeigt beispielhaft ein amplitudenmoduliertes Signal im Zeitbereich, bei dem eine als schwarze Fläche dargestellte Trägerfrequenz eine hohe Frequenz aufweist, die in einem Zeitraster tr, welches die Modulationshäufigkeit repräsentiert, moduliert wird. Bei der dargestellten Modulation handelt es sich um das Sendesignal eines 1 aus 4 codierten Signals, bei dem das Trägersignal für die Zeit tm um den Betrag Um' in seiner Amplitude reduziert wird, um ein Bit zu übertragen. Die Position, an der diese Reduzierung des Sendsignals erfolgt, definiert dabei, ob ein binärer Datenwert 00, 01, 10 oder 11 gesendet wird. Diese Modulationsposition ist in Fig. 1 beispielhaft für das Senden eines Datenwertes 01 mit der Zeit tp, dargestellt. Aus dem Verhältnis der Amplitude des modulierten Signals Um zur Amplitude des unmodulierten Signals Us wird der Modulationsgrad bestimmt.

In den technischen Standards, die die Datenübertragung für RFID-Systeme definieren, sind für die Zeiten tr, tp und tm sowie für den Modulationsgrad jeweils Toleranzbereiche definiert, in denen sich diese Modulationsparameter bewegen dürfen. Bei dem erfindungsgemäßen Verfahren werden von den in Fig. 1 dargestellten Modulationsparametern entweder jeweils einer oder mehrere Modulationsparameter gleichzeitig in definierten Zeitabständen und nach definierten Algorithmen variiert.

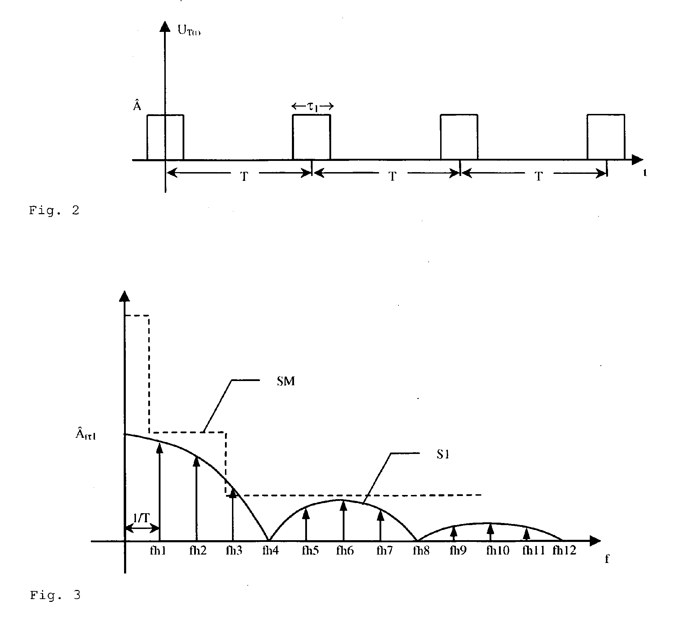

Der Einfluss einer Variation von Modulationsparametern auf die Amplituden der harmonischen Frequenzen des Frequenzspektrums eines pulsmodulierten Signals wird in Fig. 3 beispielhaft dargestellt, wobei Fig. 3 schematisch das Frequenzspektrum eines in Fig. 2 gezeigten pulsmodulierten Signals zeigt. Das in Fig. 2 dargestellte pulsmodulierte Signal weist eine Modulationshäufigkeit T und eine Modulationsdauer τ1 auf.

Durch Transformation des in Fig. 2 in einem Zeitbereich dargestellten Signals in den Frequenzbereich erhält man das in Fig. 3 gezeigte Frequenzspektrum. In diesem Frequenzspektrum sind im Abstand 1/T jeweils ausgeprägte Spektralspitzen zu erkennen, die jeweils eine harmonische Schwingung des Signals aus Fig. 2 repräsentieren. Das Spektrum selbst weist bei den harmonischen Frequenzen fh4, fh8 und fh12 je ein Minimum auf. Der Abstand dieser Minima entspricht dem Kehrwert der Modulationsdauer, also dem Wert 1/τ1. Die Linie S1 stellt die Einhüllende des entstehenden Sendefrequenzspektrums dar, während die Linie SM eine mögliche Spektrum-Maske zeigt, wie diese mit zunehmender Frequenz eine stufenweise abnehmende Amplitude der im Sendefrequenzspektrum enthaltenen Frequenzen zulässt. Fig. 3 stellt dabei nur die obere (positive) Hälfte des Sendefrequenzspektrum dar, welches in dem negativen Bereich dasselbe Aussehen aufweisen würde.

Wie in Fig. 3 zu sehen ist, würde in diesem Beispiel die Amplitude der harmonischen Frequenz fh3 die Spektrum-Maske überschreiten.

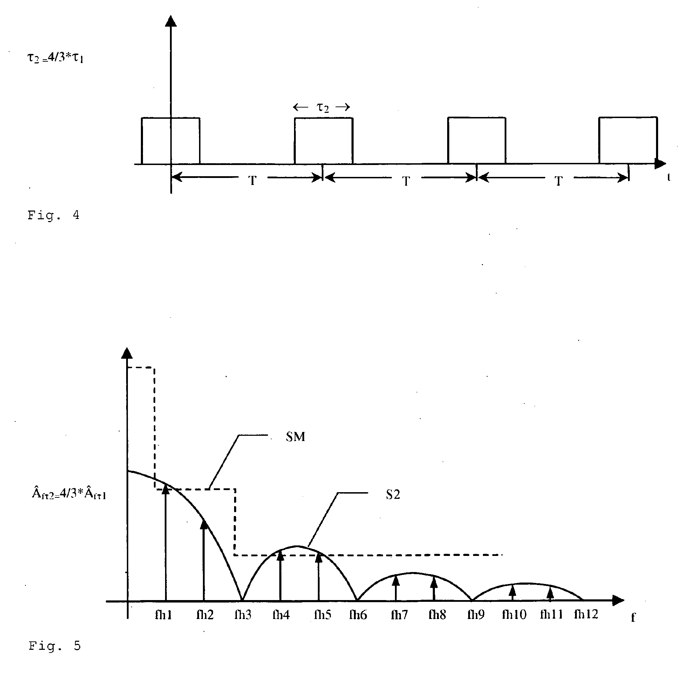

Fig. 4 zeigt nun ein pulsmoduliertes Signal, welches mit derselben Modulationshäufigkeit T wie das Signal in Fig. 2 moduliert wird, aber im Unterschied zu dem Signal aus Fig. 2 eine andere Modulationsdauer τ2 aufweist.

In Fig. 5 ist das Frequenzspektrum des Signals aus Fig. 4 aufgetragen. Da sich die harmonischen Frequenzen fh1 bis fh8 aus dem Wert 1/T bestimmen, haben diese dieselbe Position wie die harmonischen Frequenzen fh1 bis fh12 aus Fig. 3. Durch Ändern der Modulationsdauer τ2 weist das Frequenzspektrum des Signals aus Fig. 4 jedoch Minima bei den harmonischen Frequenzen fh3, fh6 und fh9 auf. Die Einhüllende dieses Signals ist mit S2 gekennzeichnet.

In Fig. 5 ist zu sehen, dass die Amplituden der harmonischen Frequenzen fh1, fh4 und fh5 das Sendefrequenzspektrum der zulässigen Spektrum-Maske übersteigen.

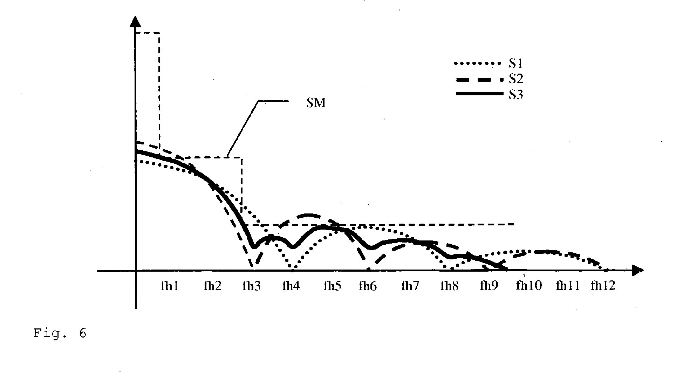

In Fig. 6 sind die Einhüllenden S1 und S2 der beiden Frequenzspektren aus Fig. 3 und Fig. 5 aufgetragen, sowie eine Einhüllende S3. Da das Signal mit der Modulationsdauer τ1 und das Signal mit der Modulationsdauer τ2 erfindungsgemäß jeweils nur für eine kurze Zeitdauer gesendet wird, das Sendefrequenzspektrum also jeweils nur für eine kurze Zeitdauer auftritt, zeigt das Ergebnis einer Mittelwertbildung mit einer definierten Filterbandbreite und einer Zeitkonstanten die Einhüllende S3, die an keiner Stelle die maximal zulässige Spektrum-Maske überschreitet.

### Bezugszeichen

- tr: Modulationshäufigkeit
- tp: Modulationsposition
- tm: Modulationsdauer
- Um: Amplitude des modulierten Signals
- Um': Amplitude der Modulation
- Us: Amplitude des unmodulierten Signals
- T: Modulationshäufigkeit
- τ: Modulationsdauer
- SM: Spektrum-Maske
- S1: Einhüllende eines Sendefrequenzspektrums
- S2: Einhüllende eines Sendefrequenzspektrums
- S3: Aus Mittelwertbildung resultierende Einhüllende eines Sendefrequenzspektrums
- fh1 bis fh12: harmonische Frequenzen

## Patentansprüche

1. Verfahren zur Optimierung eines Sendefrequenzspektrums einer RFID-Schreib-/Lesestation zur optimalen Ausnutzung des Sendefrequenzspektrums innerhalb einer vorgegebenen Spektrum-Maske, bei dem zur Ermittlung des Sendefrequenzspektrums eine Mittelwertbildung durchgeführt wird, **dadurch gekennzeichnet,**
**dass** mindestens ein das Sendefrequenzspektrum beeinflussender Modulationsparameter in zeitlichen Abständen variiert wird, und zwar in einem Maße, dass der wenigstens eine Modulationsparameter innerhalb der Toleranzgrenzen des jeweiligen technischen Standards variiert wird, und dass ein Modulationsparameter oder eine Kombination aus Modulationsparametern, bei denen die Spektrum-Maske überschritten wird, erst nach einer Zeit, die größer als die Zeitkonstante der Mittelwertbildung ist, wieder eingestellt wird.

2. Verfahren nach Anspruch 1, **dadurch gekennzeichnet, dass** als Modulationsparameter die Modulationshäufigkeit und/oder die Modulationsdauer und/oder die Modulationsposition und/oder der Modulationsgrad variiert wird.

3. Verfahren nach Anspruch 1 oder 2, **dadurch gekennzeichnet, dass** die Variation mindestens eines Modulationsparameters nach jedem Modulationssignal erfolgt.

4. Verfahren nach Anspruch 1 oder 2, **dadurch gekennzeichnet, dass** die Variation mindestens eines Modulationsparameters nach jedem gesendeten Datenwort erfolgt.

5. Verfahren nach Anspruch 1 oder 2, **dadurch gekennzeichnet, dass** die Variation mindestens eines Modulationparameters nach mindestens einem gesendeten Befehl erfolgt.

6. Verfahren nach Anspruch 1 oder 2, **dadurch gekennzeichnet, dass** die Variation mindestens eines Modulationsparameters nach mindestens einem Kommunikationszyklus erfolgt.

7. Verfahren nach einem der vorhergehen Ansprüche, **dadurch gekennzeichnet, dass** die Variation mindestens eines ModulationsparameLers nach einer Kombination aus unterschiedlichen zeitlichen Bedingungen erfolgt.

8. Verfahren nach einem der vorhergehen Ansprüche, **dadurch gekennzeichnet, dass** die Variation mindestens eines Modulationsparameters derart erfolgt, dass mindestens ein Minimum der Einhüllenden eines zweiten Frequenzspektrums nach der Variation bei einer Frequenz liegt, an der die Einhüllende eines ersten Frequenzspektrums die Spektrum-Maske überschritten hat.

## Claims

1. Method for optimising a transmission frequency spectrum of an RFID read/write station for optimal utilisation of the transmission frequency spectrum within a predetermined spectral mask, in which an averaging is carried out to determine the transmission frequency spectrum,
**characterised**
**in that** at least one modulation parameter influencing the transmission frequency spectrum is varied at time intervals, to such an extent that the at least one modulation parameter is varied within the tolerance limits of the respective technical standard, and in that one modulation parameter or a combination of modulation parameters in which the spectral mask is exceeded is adjusted again only after a time which is greater than the time constant of the averaging.

2. Method according to Claim 1, **characterised in that** the modulation frequency and/or modulation period and/or modulation position and/or modulation factor is varied as the modulation parameter.

3. Method according to Claim 1 or 2, **characterised in that** the variation of at least one modulation parameter takes place after each modulation signal.

4. Method according to Claim 1 or 2, **characterised in that** the variation of at least one modulation parameter takes place after each transmitted data word.

5. Method according to Claim 1 or 2, **characterised in that** the variation of at least one modulation parameter takes place after at least one transmitted command.

6. Method according to Claim 1 or 2, **characterised in that** the variation of at least one modulation parameter takes place after at least one communication cycle.

7. Method according to one of the preceding claims, **characterised in that** the variation of at least one modulation parameter takes place after a combination of different time conditions.

8. Method according to one of the preceding claims, **characterised in that** the variation of at least one modulation parameter takes place in such a manner that at least a minimum of the envelope of a second frequency spectrum after the variation lies at a frequency at which the envelope of a first frequency spectrum has exceeded the spectral mask.

## Revendications

1. Procédé pour l'optimisation d'un spectre de fréquences d'émission d'une station d'écriture/lecture RFID pour une utilisation optimale du spectre de fréquences d'émission à l'intérieur d'un masque de spectre prédéterminé, dans lequel, afin de fournir le spectre de fréquences d'émission, la formation d'une valeur moyenne est réalisée, **caractérisé en ce qu'**on fait varier au moins un des paramètres de modulation influençant le spectre de fréquences d'émission à des intervalles temporels et, cela dans la mesure où on fait varier au moins un paramètre de modulation à l'intérieur des limites de tolérance de la norme technique respective, et **en ce qu'**un paramètre de modulation ou une combinaison de paramètres de modulation pour lesquels le masque de spectre est dépassé, est de nouveau réglé seulement après un certain temps qui est supérieur à la constante de temps de la formation de la valeur moyenne.

2. Procédé selon la revendication 1, dans lequel comme paramètre de modulation on fait varier la fréquence de modulation et/ou la période de modulation et/ou la position de modulation et/ou le degré de modulation.

3. Procédé selon la revendication 1 ou 2, **caractérisé en ce que** la variation d'au moins un paramètre de modulation est réalisée après chaque signal de modulation.

4. Procédé selon la revendication 1 ou 2, **caractérisé en ce que** la variation d'au moins un paramètre de modulation est réalisée après chaque mot de données émis.

5. Procédé selon la revendication 1 ou 2, **caractérisé en ce que** la variation d'au moins un paramètre de modulation est réalisée après au moins l'émission d'une commande.

6. Procédé selon la revendication 1 ou 2, **caractérisé en ce que** la variation d'au moins un paramètre de modulation est réalisée après au moins un cycle de communication.

7. Procédé selon l'une quelconque des revendications précédentes, **caractérisé en ce que** la variation d'au moins un paramètre de modulation est réalisée suite à une combinaison de différentes conditions temporelles.

8. Procédé selon l'une quelconque des revendications précédentes, **caractérisé en ce que** la variation d'au moins un paramètre de modulation est réalisée de telle manière qu'au moins un minimum de l'enveloppe d'un deuxième spectre de fréquences suite à la variation, se trouve situé à une fréquence à laquelle l'enveloppe d'un premier spectre de fréquences a dépassé le masque de spectre.
